Europäisches Patentamt

European Patent Office

Office européen des brevets

(11) Publication number: 0 336 572
A2

# (12) EUROPEAN PATENT APPLICATION

(21) Application number: 89302426.5

(51) Int. Cl.⁴: **G01L 5/28**

(22) Date of filing: 13.03.89

(30) Priority: 31.03.88 GB 8807675

(43) Date of publication of application:
11.10.89 Bulletin 89/41

(84) Designated Contracting States:
BE DE ES FR GB IT SE

(71) Applicant: AUTOMOTIVE PRODUCTS PLC
Tachbrook Road
Leamington Spa Warwickshire CV31
3ER(GB)

(72) Inventor: Packer, Mervyn Brian
36 Woodcote Avenue
Kenilworth Warwickshire CV8 1BG(GB)
Inventor: Comfort, John Vivian
Compton Verney Lodge Compton Verney
Wellesbourne Warwickshire CV35 9HJ(GB)
Inventor: Gardener, David William
23 Brick Kiln Lane
Great Barr Birmingham B44 8HG(GB)

(74) Representative: Cundy, Anthony Brian et al
Anthony Cundy & Company 384 Station
Road Dorridge
Solihull West Midlands B93 8ES(GB)

(54) Brake testing.

(57) Antilock braking systems of vehicles are tested by generating a signal simulating a speed of rotation of the wheel of the vehicle and feeding the signal to the antilock braking system of the vehicle. The vehicle brakes are applied and the instantaneous brake torque is measured over a predetermined period so as to assess the operation of the antilock braking system.

FIG 3

## BRAKE TESTING

The present invention relates to a method of and an apparatus for testing antilock braking systems of vehicles.

Antilock braking systems have been developed for vehicles over recent years. Although such braking systems improve the safety of motor vehicles, it is necessary to be able to test the systems to ensure that they meet safety regulations. Existing brake testers merely measure the overall brake torque and have no capacity for testing the operation of the antilock system because they do not measure the rapid variation of brake torque experienced as a result of operation of the antilock system.

It is an object of the present invention to provide a method of and an apparatus for testing antilock braking systems for vehicles.

According to one aspect of the present invention there is provided a method of testing antilock braking systems of vehicles, which method comprises the steps of:
feeding a signal to the antilock braking system simulating a speed of rotation of a wheel of the vehicle;
applying the vehicle brakes and measuring the resulting brake torque; and
processing the instantaneous brake torque measured over a predetermined period so as to assess the operation of the antilock braking system.

Preferably the brake torque is measured by rotating the wheel of the vehicle on rollers provided with a brake torque measuring system.

Preferably the measured brake torque is employed to determine a corresponding simulated speed of rotation of the wheel and a corresponding signal is fed to the antilock braking system.

Data corresponding to a simulated road surface may be employed in determining the signal simulating the speed of rotation of the wheel. Alternatively or additionally, data corresponding to a simulated rate of application of the vehicle brakes may be employed in determining the signal simulating the speed of rotation of the wheel.

According to a second aspect of the present invention there is provided apparatus for testing antilock braking systems of vehicles, which apparatus comprises:
means for generating a signal simulating a speed of rotation of the wheel of the vehicle;
means for feeding the signal to the antilock braking system of the vehicle; and
means for measuring the instantaneous brake torque over a predetermined period so as to assess the operation of the antilock braking system.

Preferably the apparatus includes rollers for rotating a wheel of the vehicle, which rollers are provided with a brake torque measuring system.

The apparatus may include means for feeding data representative of the measured brake torque to the means for generating the signal simulating the speed of rotation of the wheel so as to generate a signal to be fed to the antilock braking system corresponding to the measured brake torque.

The apparatus may include means for feeding data representative of a simulated road surface to the means for generating the signal simulating the speed of rotation of the wheel. Alternatively or additionally, the apparatus may include means for feeding data representative of a simulated rate of application of the vehicle brakes to the means for generating the signal simulating the speed of rotation of the wheel.

For a better understanding of the present invention and to show more clearly how it may be carried into effect reference will now be made, by way of example, to the accompanying drawings in which:

Figure 1 is a schematic illustration of a brake test stand for testing antilock brakes in accordance with the present invention;

Figure 2 illustrates diagrammatically a test procedure for testing antilock brakes in accordance with the present invention;

Figure 3 illustrates in more detail parts of a brake test stand for testing antilock brakes in accordance with the present invention; and

Figure 4 illustrates the simulated response of the vehicle and the rate of rotation of the wheels during a test.

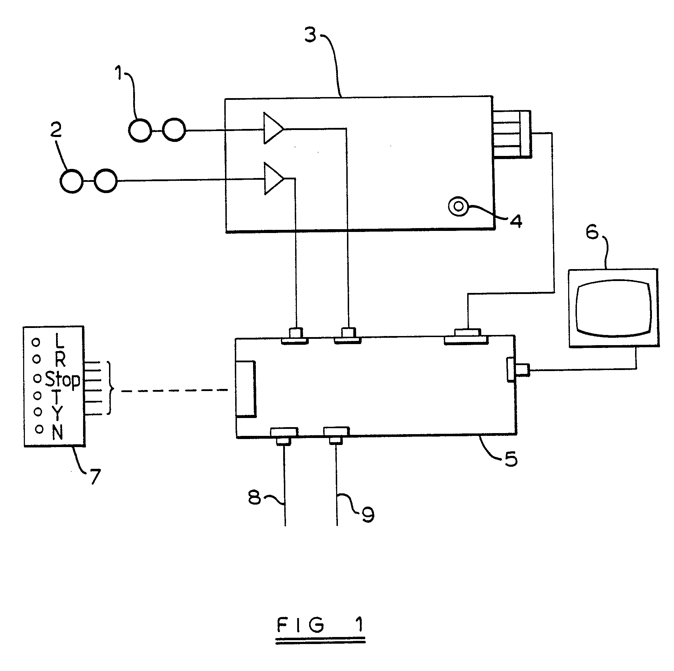

The brake test stand shown in Figure 1 comprises two sets of rollers, one set of rollers 1 for testing a left-side wheel of a vehicle (not shown) and the other set of rollers 2 for testing a right-side wheel of the vehicle. Each set of rollers is rotatable independently at a constant low speed such as 8 kilometres per hour and is provided with a fast response electronic brake torque measuring system (not shown).

Four rollers can be used instead of two when testing four wheel drive vehicles or to speed up the test.

As an alternative to the rollers, a plate dynamometer (not shown) can be used. A further alternative is to determine brake torque as a function of the brake fluid pressure. Until now this has involved breaking into the hydraulic circuit which can be undesirable, but we have found that it is possible to determine brake fluid pressure from the expansion of a flexible brake pipe. It is also possible to position a pressure transducer permanently in pressure contact with the brake fluid.

Signals from the brake torque measuring system are passed to a brake test stand 3 where the signals are converted for use elsewhere. The brake test stand is provided with an emergency stop button 4 and with inputs for controlling the rollers, there being separate facilities for starting the left rollers, starting the right rollers, stopping the left rollers and stopping the right rollers.

The signals from the brake test stand 3 are fed to a control unit 5, the control unit also providing signals for the inputs for controlling the rollers. The control unit is linked to a monitor 6 and to a hand-set 7, the link to the hand-set being by way of a cable or infra-red link. The monitor 6 displays the progress and results of the test, while the hand-set 7 enables the test to be conducted from any suitable location such as in the vehicle being tested. In this embodiment the hand set is provided with six push buttons for starting the left rollers, starting the right rollers, stopping the rollers, initiating a test sequence and for responding "yes" or "no" to prompts displayed on the monitor. The control unit is also connected to the antilock control module (not shown) within the vehicle by way of leads 8,9. The functions and operation of the control unit will be described in more detail hereinafter with reference to the test procedure.

In order to conduct the test procedure the vehicle is driven onto the rollers and the operator is prompted to disconnect the output of the wheel speed sensor from the antilock control module and to connect the leads 8,9 to the antilock control module and the wheel speed sensor. When this has been accomplished the operator presses the button T on the hand-set. The wheel speed sensor produces a signal having a frequency that is dependent on the speed of rotation of the wheel, with higher frequencies being generated for higher speeds of rotation. The sensor output is tested for correct output by control unit 5. The control unit 5 can produce signals corresponding to any desired speed of rotation and the antilock control module will react according to the simulated speed of rotation rather than the actual speed of rotation of the wheel.

The next step is to start the vehicle engine when prompted by a message on the monitor 6, after which the operator presses the button T on the hand-set. At this stage the control unit 5 feeds signals to the antilock control module simulating a steady acceleration up to a constant speed of say 100 kilometres per hour. During this phase the operator will be prompted to indicate whether or not the antilock indicator light is illuminated by pressing the button Y or N. If the light remains illuminated the test is aborted so that the system can be checked.

The next part of the test is a "bedding-in" procedure which gives the test operator an opportunity to practise achieving the brake force required for the antilock system test itself. The brake force is displayed to the test operator as a movable arrow on the monitor. The force limits required by the test are also indicated by marks on the display. If for any reason the braking force required by the test cannot be achieved, the operator has the opportunity of finding this out and the test can be aborted. Once the operator is satisfied that the braking force required for the antilock system test can be held within the indicated limits he presses the appropriate button on the hand-set and the testing of the antilock system is initiated automatically, beginning with the left-hand brakes.

After the hand-set button has been pressed, the control unit 5 monitors the brake force and checks that the force has been maintained within specified limits for a predetermined time. Once this has been achieved the control unit then initiates two separate tests of the left-hand brakes. In the first test a deceleration of the left wheel of 1.8g is simulated for a predetermined period followed by acceleration at 1.8g to the original speed and in the second test a wheel deceleration of 3.5g is simulated followed by acceleration at 3.5g to the original speed. During these two tests the torque of the brakes is measured by the electronic brake torque measuring system and the results are monitored by the control unit 5.

The control unit checks that the brake force was maintained within specified limits. Failure to maintain the force within limits prior to the simulated accelerating and decelerating results in the test being repeated, but requires no action from the test operator other than to maintain the brake force as indicated by the movable arrow on the monitor.

Once the test has been completed, the operator is prompted to release the brake, turn off the left set of rollers, turn on the right set of rollers and to repeat the tests for the right hand brakes. After this the brakes are released again, the right set of rollers is turned off and the control unit simulates a deceleration to bring the vehicle to a halt.

The monitor displays a message advising the operator whether the antilock braking system has functioned satisfactorily or not and the operator is prompted to request a print-out of the results if required. A final message prompts the operator to repeat the entire test if required, for example for the set of brakes of the other wheels, or concludes the test procedure.

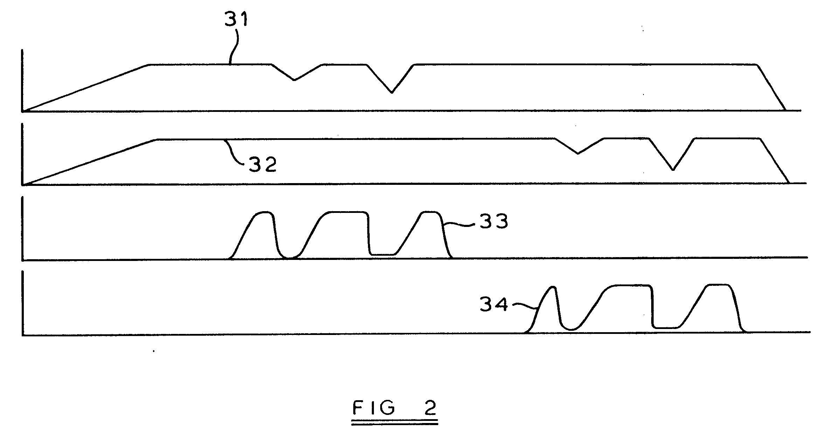

The test procedure is summarised in Figure 2 where the top graph 31 represents the simulated speed for the left wheel, the second graph 32 represents the simulated speed of the right wheel. The third graph 33 represents the torque generated by the left brakes, while the bottom graph 34 represents the torque generated by the right brakes.

The test procedure can be carried out for antilock brake systems which operate on the basis of a signal representing wheel speed to sense the onset of a skid. It is only necessary to replace the actual signal fed into the antilock control module by a signal simulating a desired speed and it is not necessary to break into the brake system hydraulics.

The brake test stand and test procedure described with reference to figures 1 and 2 can be used, for example, for end-of-line testing at a vehicle manufacturing plant or for periodic tests. However, a more sophisticated apparatus and test procedure can be used, for example, for vehicle development and involves feeding back to the antilock control module a signal representing the speed of rotation of the wheel based on the measured brake torque and other variable data.

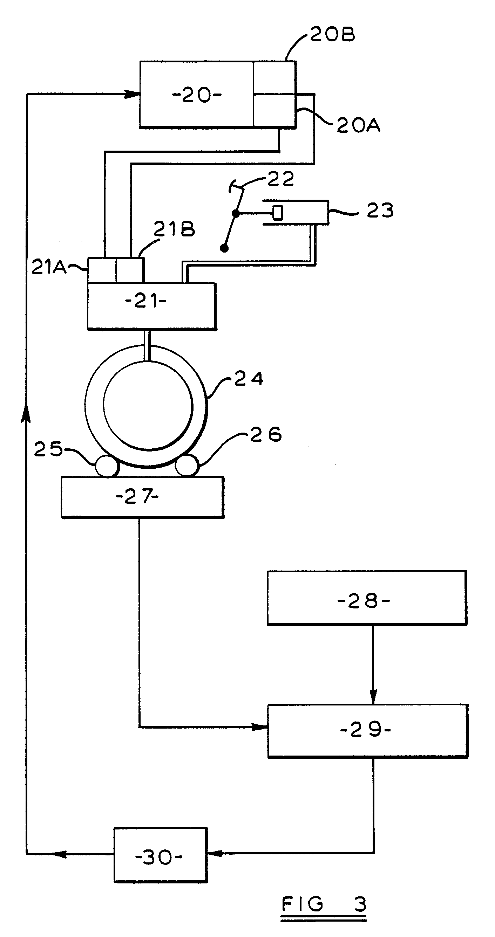

Figure 3 shows an antilock control module 20 having a speed input and two solenoid outputs 20A and 20B. The solenoid outputs are connected to an antilock servo 21 at 21A and 21B. Hydraulic pressure is created by operation of a brake pedal 22 which in turn operates a plunger in master cylinder 23 and applies hydraulic pressure to the brakes of a wheel 24 by way of the antilock servo 21. The wheel 24 is positioned on rollers 25,26 of the brake test stand, the rollers being provided with a fast response electronic brake torque measuring system 27.

Variable data for the test, such as the vehicle weight and the radius and inertia of the wheels, the front/rear braking ratio, the friction properties of the surface over which the vehicle is supposed to be travelling and the required response from the torque or vehicle simulation or test speed profile, is stored electronically, for example in a digital computer 28. In this way, data for different cars, different road surfaces and different braking procedures can conveniently be stored and used when required.

Data for the test together with signals representing the brake torque are used to compute, for example in a digital computer or an analogue computer 29, in real time the vehicle speed, the retarding force at the road surface, and consequently the speed of rotation of the wheel. A signal representing the speed of rotation of the wheel is fed to an oscillator 30, such as a voltage controlled oscillator, which generates a frequency signal representative of the speed of rotation of the wheel. This signal is fed to the antilock control module 20 which in turn controls the brakes thus forming a closed loop system which responds progressively to the simulated conditions.

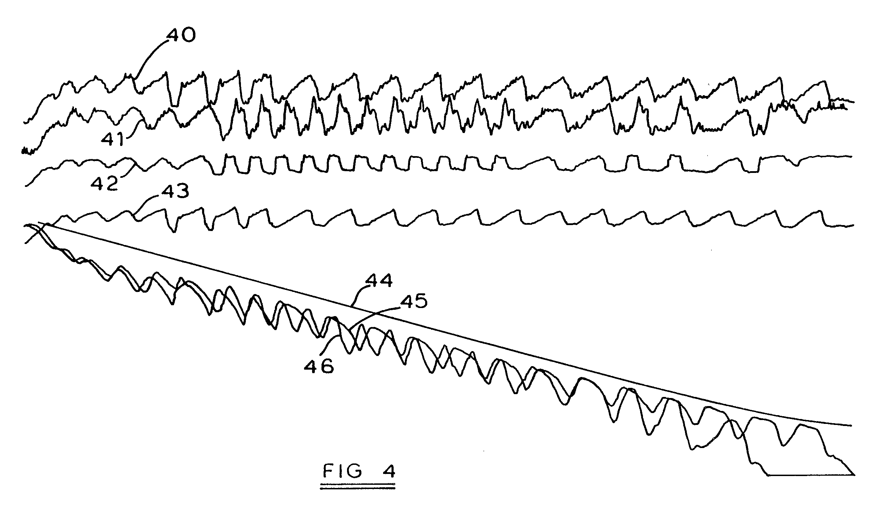

The response of the system is shown diagrammatically in Figure 4. It is possible to display such details on the monitor if required, but as an alternative the details could be printed at the conclusion of the test.

The upper line 40 on the graph shows the measured brake torque of the left brake and the second line 41 shows the measured brake torque of the right brake, the two torques having different zero levels on the graph.

The third line 42 shows the actual pressure of the hydraulic fluid in the right brake and the fourth line 43 shows the actual pressure of the hydraulic fluid in the left brake, the two pressures having different zero levels on the graph. It is in fact not necessary to measure these pressures during the test procedure but they are shown in Figure 4 for information.

The lower three lines on the graph show the resulting speed of the vehicle and the speeds of the left and right wheels. Vehicle speed is shown by the steadily falling line 44, while the speed of the left wheel is shown by the line 45 and the speed of the right wheel is shown by the line 46.

Figure 4 shows that while the vehicle speed decreases progressively the corresponding wheel speed fluctuates considerably. This is because as the brakes are applied the conditions simulated are such as would cause a skid to develop. As the skid develops the speed of the wheel falls relative to the speed of the car and would eventually stop rotating. This is simulated by the computer in the control unit and is detected by the antilock control module which reduces the hydraulic pressure, thus releasing the brake. As the brake is released, the brake torque is seen to fall and this allows the simulated speed of the wheel to accelerate towards the speed of the car. As the wheel speed is increased this is detected by the antilock control module which allows the brakes to be reapplied and this process of releasing and applying the brakes continues as the vehicle slows. The resulting brake torque measured during the test can be used to assess whether or not the antilock braking system is operating correctly.

## Claims

1. A method of testing antilock braking systems of vehicles, comprising the steps of feeding a signal to the antilock braking system simulating a speed of rotation of a wheel (24) of the vehicle, and applying the vehicle brakes and measuring the resulting brake torque, **characterised in that** the instantaneous brake torque measured over a predetermined period is processed so as to assess the operation of the antilock braking system.

2. A method according to claim 1, **characterised in that** the brake torque is measured by rotating the wheel (24) of the vehicle on rollers (25,26) provided with a brake torque measuring system (27).

3. A method according to claim 1 or 2, **characterised in that** the measured brake torque is employed to determine a corresponding simulated speed of rotation of the wheel (24) and a corresponding signal is fed to the antilock braking system.

4. A method according to claims 1,2 or 3, **characterised in that** data corresponding to a simulated road surface is employed in determining the signal simulating the speed of rotation of the wheel.

5. A method according to any preceding claim, **characterised in that** data corresponding to a simulated rate of application of the vehicle brakes is employed in determining the signal simulating the speed of rotation of the wheel.

6. Apparatus for testing antilock braking systems of vehicles, comprising means (5) for generating a signal simulating a speed of rotation of the wheel of the vehicle and means (8,9) for feeding the signal to the antilock braking system of the vehicle, **characterised in that** means (27) is provided for measuring the instantaneous brake torque over a predetermined period so as to assess the operation of the antilock braking system

7. Apparatus as claimed in claim 6, **characterised in that** rollers (24) are provided for rotating a wheel of the vehicle, which rollers are provided with a brake torque measuring system (27).

8. Apparatus as claimed in claims 6 or 7, **characterised in that** means is provided for feeding data representative of the measured brake torque to the means (30) for generating the signal simulating the speed of rotation of the wheel so as to generate a signal to be fed to the antilock braking system corresponding to the measured brake torque.

9. Apparatus as claimed in claims 6,7 or 8, **characterised in that** means (28) is provided for feeding data representative of a simulated road surface to the means for generating the signal simulating the speed of rotation of the wheel.

10. Apparatus as claimed in any one of claims 6 to 9, **characterised in that** means in included for feeding data representative of a simulated rate of application of the vehicle brakes to the means for generating the signal simulating the speed of rotation of the wheels.

F I G   1

FIG 2

EP 0 336 572 A2

FIG 3

FIG 4

EP 0 336 572 A2